# EUROPEAN PATENT APPLICATION

(11) **EP 4 454 907 A1**
(43) Date of publication of application: **30.10.2024**
(21) Application number: 22911367.5
(22) Date of filing: 22.12.2022
(51) Int. Cl.: B60G 21/055

(54) **STABILIZER MANUFACTURING METHOD, STABILIZER, AND TUBULAR MEMBER FOR MANUFACTURING STABILIZER**

(30) Priority: 24.12.2021 JP 2021210187
(71) Applicant: NHK Spring Co., Ltd., Yokohama-shi, Kanagawa 236-0004 (JP)
(72) Inventor: WAKABAYASHI, Yutaka, Yokohama-shi, Kanagawa 236-0004 (JP); FUJIMURA, Rintaro, Yokohama-shi, Kanagawa 236-0004 (JP); KAWAKAMI, Norihiro, Yokohama-shi, Kanagawa 236-0004 (JP)
(74) Representative: Hoffmann Eitle
(86) International application number: PCT/JP2022/047442
(87) International publication number: WO 2023/120665

(57) **Abstract**

A stabilizer manufacturing method according to the present invention includes forming a first end and a second end of a stabilizer by processing a tubular member, wherein the tubular member includes: a central portion having a tubular shape; a first reduced diameter portion having a tubular shape and provided on one end side of the central portion, the first reduced diameter portion having a wall thickness equivalent to a wall thickness of the central portion and having a diameter smaller than a diameter of the central portion; a second reduced diameter portion having a tubular shape and provided on the other end side of the central portion, the second reduced diameter portion having a wall thickness equivalent to the wall thickness of the central portion and having a diameter smaller than the diameter of the central portion; a first connecting portion having a conical shape and connecting the central portion and the first reduced diameter portion to each other; and a second connecting portion having a conical shape and connecting the central portion and the second reduced diameter portion to each other, the first end and the second end constitutes both ends of the stabilizer and each has a wall thickness equivalent to a wall thickness of a main body of the stabilizer, and the first end and the second end are formed by sandwiching and pressing each of the first reduced diameter portion and the second reduced diameter portion by a pair of first pressing members.

## Description

### Field

The present invention relates to a stabilizer manufacturing method, a stabilizer, and a stabilizer manufacturing base tubular member.

### Background

A stabilizer used in a vehicle or the like is attached to the vehicle to stabilize the posture of the vehicle. The stabilizer is formed by deforming a solid rod-shaped member, for example (refer to Patent Literature 1, for example). The stabilizer has its two ends connected to the vehicle, with each connecting portion having a planar shape. Each of the ends of the stabilizer is formed into a flat-plate shape by crushing a bar-shaped member, and then a hole for insertion of a bolt or the like is formed on each of the flat-plate shaped ends. At this time, both side surface portions of the flat-plate portions are cut off to adjust the width of the flat-plate portions.

Meanwhile, in order to reduce the weight of the vehicle, there is an increasing demand for weight reduction of the stabilizer. An example of implementing the weight reduction of the stabilizer is changing the material used for formation from a solid rod-like member to a hollow tubular member.

### Citation List

### Patent Literature

Patent Literature 1: JP 10-193944 A

### Summary

### Technical Problem

However, in a case where the material is changed to a tubular member, cutting off both side surface portions of the both ends, which have been formed into the flat-plate portions, might reduce the wall thickness of the side surface portions or lose the side surface portions by the cutting. A failure to ensure a sufficient wall thickness of the side surface portion would lower the strength of the stabilizer.

The present invention has been made in view of the above, and aims to provide a stabilizer manufacturing method, a stabilizer, and a stabilizer manufacturing base tubular member, capable of achieving a sufficient strength in both ends of the stabilizer and weight reduction of the stabilizer.

### Solution to Problem

To solve the above-described problem and achieve the object, a stabilizer manufacturing method according to the present invention includes forming a first end and a second end of a stabilizer by processing a tubular member, wherein the tubular member includes: a central portion having a tubular shape; a first reduced diameter portion having a tubular shape and provided on one end side of the central portion, the first reduced diameter portion having a wall thickness equivalent to a wall thickness of the central portion and having a diameter smaller than a diameter of the central portion; a second reduced diameter portion having a tubular shape and provided on the other end side of the central portion, the second reduced diameter portion having a wall thickness equivalent to the wall thickness of the central portion and having a diameter smaller than the diameter of the central portion; a first connecting portion having a conical shape and connecting the central portion and the first reduced diameter portion to each other; and a second connecting portion having a conical shape and connecting the central portion and the second reduced diameter portion to each other, the first end and the second end constitutes both ends of the stabilizer and each has a wall thickness equivalent to a wall thickness of a main body of the stabilizer, and the first end and the second end are formed by sandwiching and pressing each of the first reduced diameter portion and the second reduced diameter portion by a pair of first pressing members.

Moreover, in the above-described stabilizer manufacturing method according to the present invention, the first and second ends having the wall thickness equivalent to the wall thickness of the main body are formed by sandwiching and pressing each of the first and second reduced diameter portions by the pair of first pressing members and a pair of second pressing members having different facing directions from facing directions of the pair of first pressing members.

Moreover, in the above-described stabilizer manufacturing method according to the present invention, the pair of first pressing members and the pair of second pressing members simultaneously sandwich and press the first and second reduced diameter portions.

Moreover, a stabilizer according to the present invention is formed by using a tubular member including: a central portion having a tubular shape; a first reduced diameter portion having a tubular shape and provided on one end side of the central portion, the first reduced diameter portion having a wall thickness equivalent to a wall thickness of the central portion and having a diameter smaller than a diameter of the central portion; a second reduced diameter portion having a tubular shape and provided on the other end side of the central portion, the second reduced diameter portion having a wall thickness equivalent to the wall thickness of the central portion and having a diameter smaller than the diameter of the central portion; a first connecting portion having a conical shape and connecting the central portion and the first reduced diameter portion to each other; and a second connecting portion having a conical shape and connecting the central portion and the second reduced diameter portion to each other, and includes: a main body having a tubular shape; a first end provided on one end side of the main body and having a flat plate shape, the first end formed to have an annular shape having a wall thickness equivalent to a wall thickness of the main body; and a second end provided on the other end side of the main body and having a flat plate shape, the second end formed to have an annular shape having a wall thickness equivalent to the wall thickness of the main body, wherein each of the first and second ends includes first and second planar portions having planar shapes formed on opposite sides to each other.

Moreover, in the above-described stabilizer according to the present invention, the first and second ends further include third and fourth planar portions formed on opposite sides to each other and having planar shapes and each positioned at joining portions of the first and second planar portions.

Moreover, a stabilizer manufacturing base tubular member according to the present invention includes: a central portion having a tubular shape; a first reduced diameter portion having a tubular shape and provided on one end side of the central portion, the first reduced diameter portion having a wall thickness equivalent to a wall thickness of the central portion and having a diameter smaller than a diameter of the central portion; a second reduced diameter portion having a tubular shape and provided on the other end side of the central portion, the second reduced diameter portion having a wall thickness equivalent to the wall thickness of the central portion and having a diameter smaller than the diameter of the central portion; a first connecting portion having a conical shape and connecting the central portion and the first reduced diameter portion to each other; and a second connecting portion having a conical shape and connecting the central portion and the second reduced diameter portion to each other.

### Advantageous Effects of Invention

According to the present invention, it is possible to achieve a sufficient strength in both ends of the stabilizer and weight reduction of the stabilizer.

### Brief Description of Drawings

FIG. 1 is a perspective view illustrating an example of a suspension mechanism including a stabilizer according to an embodiment of the present invention.
FIG. 2 is a plan view illustrating a configuration of the stabilizer illustrated in FIG. 1.
FIG. 3 is a plan view of the stabilizer in a region R illustrated in FIG. 2 as viewed in the direction of arrow A.
FIG. 4 is a cross-sectional view taken along line B-B illustrated in FIG. 3.
FIG. 5 is a plan view illustrating an end surface of the stabilizer as viewed in the direction of arrow C illustrated in FIG. 3.
FIG. 6 is a perspective view illustrating a configuration of a tubular member for fabricating the stabilizer according to an embodiment of the present invention.
FIG. 7 is a plan view illustrating an end surface of the tubular member as viewed in the direction of arrow D illustrated in FIG. 6.
FIG. 8 is a view illustrating a stabilizer manufacturing method according to an embodiment of the present invention.
FIG. 9 is a view illustrating a stabilizer manufacturing method according to a modification of the embodiment of the present invention.
FIG. 10 is a plan view illustrating an end surface of the stabilizer according to the modification of the embodiment of the present invention.

### Description of Embodiments

Hereinafter, modes for carrying out the present invention (hereinafter, referred to as "embodiment") will be described with reference to the accompanying drawings. Note that the drawings are schematic, and the relationship between the thickness and the width of each portion, the ratio of the thickness of each portion, and the like may be different from actual measurements, and portions having different dimensional relationships and ratios may be included in individual drawings.

### (Embodiment)

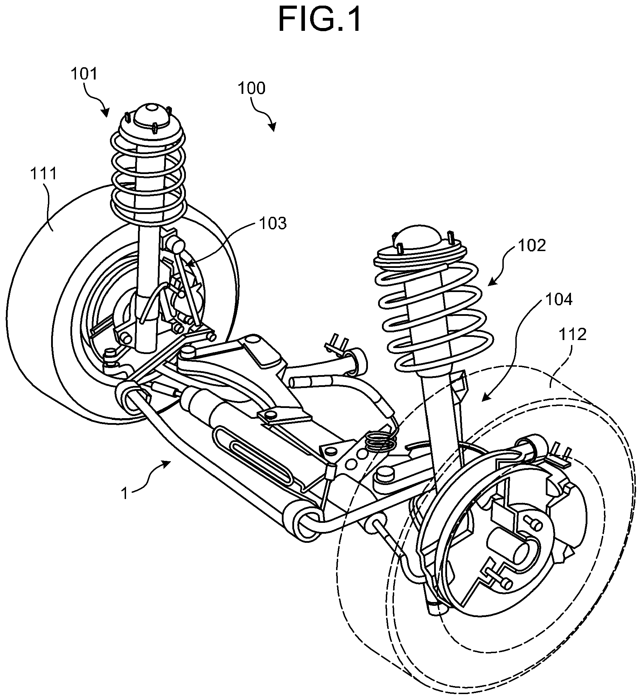

FIG. 1 is a perspective view illustrating an example of a suspension mechanism including a stabilizer according to an embodiment of the present invention. A suspension mechanism 100 illustrated in FIG. 1 includes a stabilizer 1, suspensions 101 and 102, and links 103 and 104. The suspensions 101 and 102 each include an extendable coil spring. When the suspension mechanism 100 is provided in an automobile, the suspensions 101 and 102 are provided respectively for tires 111 and 112 (for example, front wheels) so as to absorb vibration transmitted from the tires 111 and 112 corresponding to the unevenness of a road surface. The suspensions 101 and 102 are connected with the stabilizer 1 via the links 103 and 104, respectively.

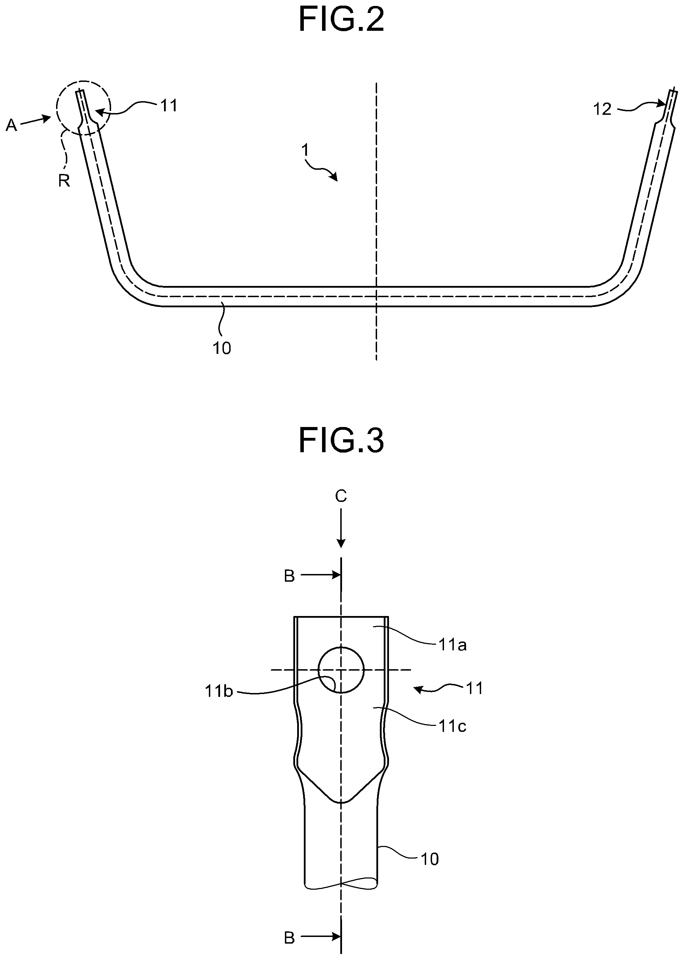

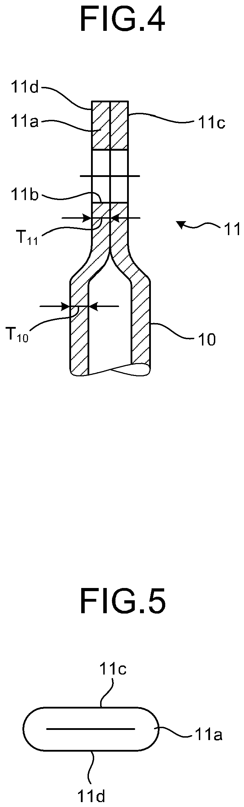

FIG. 2 is a plan view illustrating a configuration of the stabilizer illustrated in FIG. 1. FIG. 3 is a plan view of the stabilizer in a region R illustrated in FIG. 2 as viewed in the direction of arrow A. FIG. 4 is a cross-sectional view taken along line B-B illustrated in FIG. 3. FIG. 5 is a plan view illustrating an end surface of the stabilizer as viewed in the direction of arrow C illustrated in FIG. 3.

The stabilizer 1 is formed using a tubular member made of metal or various fibers (for example, carbon fibers). The stabilizer 1 includes: a main body 10; a first end 11 continuous with one end of the main body 10; and a second end 12 continuous with the other end of the main body 10.

The main body 10 has its central portion extending in a straight line shape, and has its both ends formed to be bent.

The first end 11 has a flat portion 11a having a flat shape. The flat portion 11a has a hole 11b penetrating in the thickness direction (refer to FIGS. 3 and 4). As illustrated in FIG. 4, a wall thickness T₁₀ of the main body 10 and a wall thickness T₁₁ of the first end 11 are equivalent to or substantially equal to each other. The term "substantially equal" as used herein represents equality including a difference in the degree of manufacturing error. The first end 11 has a closed annular shape (shape in which inner peripheral surfaces of the portions are in contact with each other) in plan view in the direction of arrow C (refer to FIG. 5). The shape of the portion, in the plan view, is not limited to the closed annular shape illustrated in FIG. 5, and may be an annular shape having a hollow space. At this time, a closed annular shape is preferable from the viewpoint of achieving a sufficient strength of the first end 11.

In addition, the first end 11 includes planar portions 11c and 11d. When the first end 11 is attached to an automobile or the like, the planar portion 11c comes into contact with a fastening member such as a bolt head, a washer, or a nut, for example. The surface of the stabilizer 1 with which the fastening member comes into contact is preferably a planar surface.

The second end 12 has a shape similar to the shape of the first end 11. The second end 12 has a flat portion having a flat shape, and has a hole penetrating in the thickness direction. The second end 12 has a wall thickness equivalent to or substantially equal to a wall thickness of the main body 10.

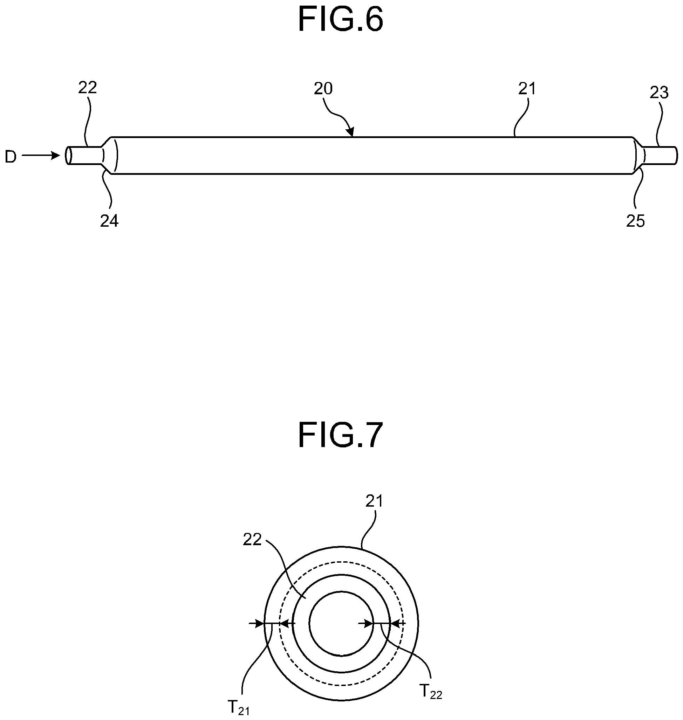

Subsequently, end fabrication processing of the stabilizer 1 described above will be described with reference to FIGS. 6 to 8. The stabilizer 1 is fabricated by processing a base material. In the present embodiment, a tubular base material is bent, and then, both ends of the material are processed into flat plate shapes. Thereafter, a through hole is formed at each end.

FIG. 6 is a perspective view illustrating a configuration of a tubular member for fabricating the stabilizer according to an embodiment of the present invention. FIG. 7 is a plan view illustrating an end surface of the tubular member as viewed in the direction of arrow D illustrated in FIG. 6. A tubular member 20 to be a base material of the stabilizer 1 includes: a central portion 21 having a tubular shape; a first reduced diameter portion 22 provided on one end side of the central portion 21 and having a tubular shape with a diameter smaller than the diameter of the central portion 21; a second reduced diameter portion 23 provided on the other end side of the central portion 21 and having a tubular shape with a diameter smaller than the diameter of the central portion 21; a first connecting portion 24 having a conical shape and connecting the central portion 21 and the first reduced diameter portion 22 to each other; and a second connecting portion 25 having a conical shape and connecting the central portion 21 and the second reduced diameter portion 23 to each other. The central portion 21, the first reduced diameter portion 22, and the second reduced diameter portion 23 each extend while maintaining a uniform outer diameter and inner diameter.

In the tubular member 20, the first reduced diameter portion 22 and the second reduced diameter portion 23 are formed by processing both ends of a member having a uniform outer diameter and inner diameter. The processing at this time can use swaging, for example. The swaging may be processing using a core metal or processing not using a core metal. The first reduced diameter portion 22 has a wall thickness equivalent to the wall thickness of the central portion 21. As illustrated in FIG. 7, the tubular member 20 is formed such that a wall thickness T₂₁ of the central portion 21 and a wall thickness T₂₂ of the first reduced diameter portion 22 are equivalent to each other or satisfy T₂₁ < T₂₂. The term "equivalent" as used herein includes a case of being equal to each other and a case with a manufacturing error.

The shape and wall thickness of the second reduced diameter portion 23 are also similar to the case of the first reduced diameter portion 22.

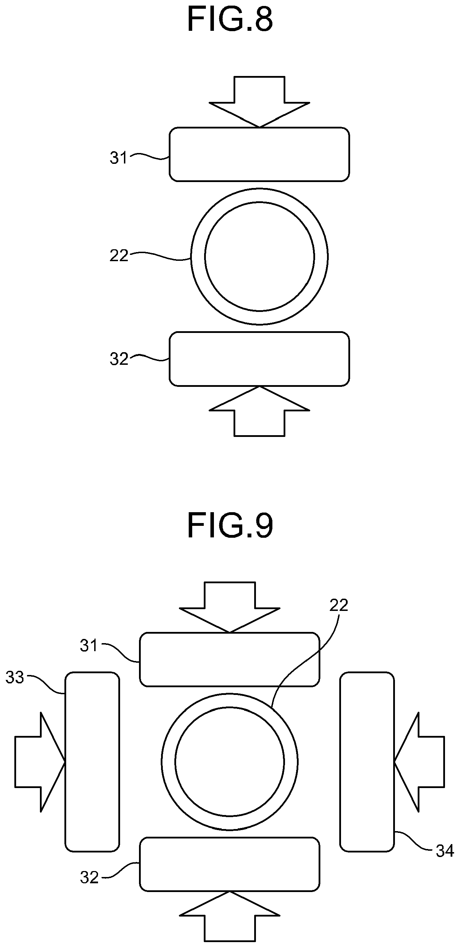

In the present embodiment, the reduced diameter portion is sandwiched and pressed by the pair of pressing members, thereby forming the end of the stabilizer 1. FIG. 8 is a view illustrating a stabilizer manufacturing method according to an embodiment of the present invention. As illustrated in FIG. 8, a first pressing member 31 and a second pressing member 32 facing each other across the first reduced diameter portion 22 sandwich and press the first reduced diameter portion 22 so as to form the first end 11. Similarly, the second end 12 is formed by sandwiching and pressing the second reduced diameter portion 23 by the first pressing member 31 and the second pressing member 32. The first pressing member 31 and the second pressing member 32 are movable by driving of an actuator, for example. The first pressing member 31 and the second pressing member 32 are positioned by a block that restricts the pressing amounts of the first pressing member 31 and the second pressing member 32. This block is disposed at a position where movement amounts of the first pressing member 31 and the second pressing member 32 by the actuator can be forcibly stopped and at a position not interfering with the tubular member 20.

When the first end 11 and the second end 12 are formed by the first pressing member 31 and the second pressing member 32, pressing is performed while maintaining the wall thickness of the first reduced diameter portion 22 and the second reduced diameter portion 23. When pressed, the wall thicknesses of the first reduced diameter portion 22 and the second reduced diameter portion 23 increase after the processing. Here, in the case of not using a core rod plug to be inserted inside during processing, since the volumes of the reduced diameter portion before and after processing are the same, the volume corresponding to the reduced diameter portion is allocated to the length and the wall thickness. This increases the length and the wall thickness. Therefore, the first end 11 and the second end 12 are equivalent to or greater than the wall thickness T₂₁ of the central portion 21, the wall thickness (wall thickness T₂₂) of the first reduced diameter portion 22, and the wall thickness of the second reduced diameter portion 23. Since the central portion 21 corresponds to the main body 10, the wall thicknesses of the first end 11 and the second end 12 are equivalent to or greater than the wall thickness of the main body 10.

In addition, the outer diameters of the first reduced diameter portion 22 and the second reduced diameter portion 23 are reduced with respect to the central portion 21, and this leads to suppression of an increase in the maximum widths of the first end 11 and the second end 12 with respect to the outer diameter of the main body 10 in the direction perpendicular to each extending direction of the first end 11 and the second end 12.

Here, regarding the first reduced diameter portion 22 and the second reduced diameter portion 23, since the cross-sectional area of the reduced diameter portion is to be equal to the cross-sectional area after processing (crushing), the diameter of the reduced diameter portion is designed after obtaining the cross-sectional area in a case of the width equal to or less than the width of the end to be fabricated.

Furthermore, by pressing the first reduced diameter portion 22 and the second reduced diameter portion 23, for example, there is provided a narrow portion, being derived from the reduced diameter portion and in which the width of a part is reduced, formed on the main body 10 side of the first end 11 (refer to FIG. 3). Similarly, a narrow portion in which the width is partially reduced is also formed in the second end 12.

In the present embodiment, the first end 11 and the second end 12 of the stabilizer 1 are formed using the tubular member 20, which includes: the central portion 21; and both ends (the first reduced diameter portion 22 and the second reduced diameter portion 23) having an outer diameter reduced with respect to the central portion 21 and having a wall thickness equivalent to the wall thickness of the central portion 21. According to the present embodiment, by forming the first end 11 and the second end 12 by pressing the material into a flat-plate shape while maintaining the wall thicknesses of the first reduced diameter portion 22 and the second reduced diameter portion 23, it is possible to achieve a sufficient strength of both ends by suppressing the thinning and to reduce the weight of the stabilizer by using the tubular shape.

### (Modification)

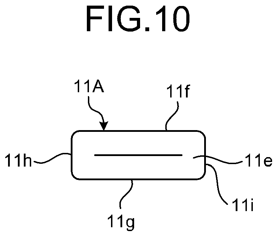

Next, a modification of the embodiment of the present invention will be described with reference to FIGS. 9 and 10. Note that the same components as those in the embodiment are denoted by the same reference numerals. The present modification is different from the above-described embodiment in a method of forming the first end 11 and the second end 12.

In the present modification, the reduced diameter portion is sandwiched and pressed by two pairs of pressing members facing each other in different directions, thereby forming the end of the stabilizer 1. FIG. 9 is a view illustrating a stabilizer manufacturing method according to the modification of the embodiment of the present invention. As illustrated in FIG. 9, the first reduced diameter portion 22 is sandwiched and pressed by the first pressing member 31 and the second pressing member 32 facing each other across the first reduced diameter portion 22 and also pressed by a third pressing member 33 and a fourth pressing member 34 facing each other across the first reduced diameter portion 22 and facing each other in a direction orthogonal to the facing direction of the first pressing member 31 and the second pressing member 32, thereby forming the first and second ends. At this time, the reduced diameter portions are simultaneously pressed by the first pressing member 31 to the fourth pressing member 34 in two directions orthogonal to each other. At this time, for example, the first pressing member 31 and the second pressing member 32 come into contact with the tubular member 20 earlier than the third pressing member 33 and the fourth pressing member 34, and the third pressing member 33 and the fourth pressing member 34 abut on the first pressing member 31 and the second pressing member 32, thereby restricting the pressing amounts by the third pressing member 33 and the fourth pressing member 34. The first pressing member 31, the second pressing member 32, the third pressing member 33, and the fourth pressing member 34 are movable by the driving of an actuator, for example.

In the modification, when the first and second ends are formed by the first pressing member 31 to the fourth pressing member 34, the pressing is performed while maintaining the wall thickness of the first reduced diameter portion 22 and the second reduced diameter portion 23. Here, the pressing amounts of the first pressing member 31 and the second pressing member 32 are restricted by the above-described block. The movement amounts of the third pressing member 33 and the fourth pressing member 34 are restricted by abutting on the first pressing member 31 and/or the second pressing member 32.

The first and second ends formed by the pressing method of the modification will be described using the first end as an example. FIG. 10 is a plan view illustrating an end surface of the stabilizer according to the modification of the embodiment of the present invention. The plan view illustrated in FIG. 10 corresponds to a view of the stabilizer 1 as viewed in the direction of arrow C illustrated in FIG. 3. A first end 11A according to the modification includes a flat portion 11e having a flat shape. The flat portion 11e has a hole (corresponding to the above-described hole 11b) penetrating in the thickness direction. In addition, the wall thickness of the main body 10 and the wall thickness of the first end 11A are equivalent to or substantially equal to each other.

The first end 11A includes planar portions 11f to 11i. The planar portions 11f and 11g make planes perpendicular to the planar portions 11h and 11i. By forming the planar portions by pressing in two directions different from each other as in the modification, for example, the planar regions of the planar portions 11f and 11g can be increased as compared with the planar regions of the planar portions 11c and 11d according to the embodiment.

In the present modification, similarly to the embodiment, the first end (first end 11A) and the second end of the stabilizer 1 are formed using the tubular member 20 (refer to FIG. 6), which includes: the central portion 21; and both ends (the first reduced diameter portion 22 and the second reduced diameter portion 23) having an outer diameter reduced with respect to the central portion 21 and having a wall thickness equivalent to the wall thickness of the central portion. According to the present modification, by forming the first and second ends by pressing the material into flat-plate shapes while maintaining the wall thicknesses of the first reduced diameter portion 22 and the second reduced diameter portion 23, it is possible to achieve a sufficient strength of both ends of the stabilizer by suppressing the thinning and to reduce the weight of the stabilizer by using the tubular shape.

In addition, in the present modification, both ends of the tubular member 20 are pressed in two directions orthogonal to each other to form a flat-plate shape, making it possible to form an end having an increased planar region while suppressing an increase in width as compared with the first and second ends according to the embodiment. With this configuration, it is possible to increase a contact region with a fastening member at the first and second ends, and as a result, it is possible to increase the degree of freedom of applicable types of the fastening member and to stabilize the contact state with the fastening member.

Although the above-described modification is an example in which the first pressing member 31 and the second pressing member 32, and the third pressing member 33 and the fourth pressing member 34, simultaneously sandwich the reduced diameter portion, the timing is not limited thereto, and the timings of sandwiching may be different from each other.

Although the embodiments for carrying out the present invention have been described so far, the present invention should not be limited only by the above-described embodiments. For example, the present invention is applicable to a product in which the end is required to be formed into a flat-plate shape and the width of the flat plate portion is required to be suppressed.

As described above, the present invention can include various embodiments and the like not described herein, and various design changes and the like can be made without departing from the technical concept specified by the claims.

### Industrial Applicability

As described above, the stabilizer manufacturing method, the stabilizer, and the stabilizer manufacturing base tubular member according to the present invention are suitable for achieving a sufficient strength in both ends of the stabilizer and weight reduction of the stabilizer.

### Reference Signs List

1 STABILIZER
10 MAIN BODY
11, 11A FIRST END
11a, 11e FLAT PORTION
11b HOLE
11c, 11d, 11f to 11i PLANAR PORTION
12 SECOND END
20 TUBULAR MEMBER
21 CENTRAL PORTION
22 FIRST REDUCED DIAMETER PORTION
23 SECOND REDUCED DIAMETER PORTION
24 FIRST CONNECTING PORTION
25 SECOND CONNECTING PORTION
31 FIRST PRESSING MEMBER
32 SECOND PRESSING MEMBER
33 THIRD PRESSING MEMBER
34 FOURTH PRESSING MEMBER

## Claims

1. A stabilizer manufacturing method comprising
forming a first end and a second end of a stabilizer by processing a tubular member, wherein
the tubular member includes:
a central portion having a tubular shape;
a first reduced diameter portion having a tubular shape and provided on one end side of the central portion, the first reduced diameter portion having a wall thickness equivalent to a wall thickness of the central portion and having a diameter smaller than a diameter of the central portion;
a second reduced diameter portion having a tubular shape and provided on the other end side of the central portion, the second reduced diameter portion having a wall thickness equivalent to the wall thickness of the central portion and having a diameter smaller than the diameter of the central portion;
a first connecting portion having a conical shape and connecting the central portion and the first reduced diameter portion to each other; and
a second connecting portion having a conical shape and connecting the central portion and the second reduced diameter portion to each other,
the first end and the second end constitutes both ends of the stabilizer and each has a wall thickness equivalent to a wall thickness of a main body of the stabilizer, and
the first end and the second end are formed by sandwiching and pressing each of the first reduced diameter portion and the second reduced diameter portion by a pair of first pressing members.

2. The stabilizer manufacturing method according to claim 1, wherein the first and second ends having the wall thickness equivalent to the wall thickness of the main body are formed by sandwiching and pressing each of the first and second reduced diameter portions by the pair of first pressing members and a pair of second pressing members having different facing directions from facing directions of the pair of first pressing members.

3. The stabilizer manufacturing method according to claim 2, wherein the pair of first pressing members and the pair of second pressing members simultaneously sandwich and press the first and second reduced diameter portions.

4. A stabilizer formed by using a tubular member including: a central portion having a tubular shape; a first reduced diameter portion having a tubular shape and provided on one end side of the central portion, the first reduced diameter portion having a wall thickness equivalent to a wall thickness of the central portion and having a diameter smaller than a diameter of the central portion; a second reduced diameter portion having a tubular shape and provided on the other end side of the central portion, the second reduced diameter portion having a wall thickness equivalent to the wall thickness of the central portion and having a diameter smaller than the diameter of the central portion; a first connecting portion having a conical shape and connecting the central portion and the first reduced diameter portion to each other; and a second connecting portion having a conical shape and connecting the central portion and the second reduced diameter portion to each other, the stabilizer comprising:
a main body having a tubular shape;
a first end provided on one end side of the main body and having a flat plate shape, the first end formed to have an annular shape having a wall thickness equivalent to a wall thickness of the main body; and
a second end provided on the other end side of the main body and having a flat plate shape, the second end formed to have an annular shape having a wall thickness equivalent to the wall thickness of the main body,
wherein each of the first and second ends includes first and second planar portions having planar shapes formed on opposite sides to each other.

5. The stabilizer according to claim 4, wherein the first and second ends further include third and fourth planar portions formed on opposite sides to each other and having planar shapes and each positioned at joining portions of the first and second planar portions.

6. A stabilizer manufacturing base tubular member, comprising:
a central portion having a tubular shape;
a first reduced diameter portion having a tubular shape and provided on one end side of the central portion, the first reduced diameter portion having a wall thickness equivalent to a wall thickness of the central portion and having a diameter smaller than a diameter of the central portion;
a second reduced diameter portion having a tubular shape and provided on the other end side of the central portion, the second reduced diameter portion having a wall thickness equivalent to the wall thickness of the central portion and having a diameter smaller than the diameter of the central portion;
a first connecting portion having a conical shape and connecting the central portion and the first reduced diameter portion to each other; and
a second connecting portion having a conical shape and connecting the central portion and the second reduced diameter portion to each other.
